# EUROPÄISCHE PATENTANMELDUNG

(11) **EP 3 594 695 A2**
(43) Veröffentlichungstag der Anmeldung: **15.01.2020**
(21) Anmeldenummer: 19182466.3
(22) Anmeldetag: 26.06.2019
(51) Int. Cl.: G01P 3/487, G01B 7/12

(54) **VERFAHREN UND VORRICHTUNG ZUR BESTIMMUNG DER RADGRÖSSE**

(30) Priorität: 09.07.2018 DE 102018211282
(71) Anmelder: Robert Bosch GmbH, 70442 Stuttgart (DE)
(72) Erfinder: Stegmaier, Juergen, 72827 Wannweil (DE); Schnee, Jan, 71093 Weil Im Schoenbuch (DE)

(57) **Zusammenfassung**

Mit dem beanspruchten Verfahren bzw. der beanspruchten Vorrichtung kann die Radgröße eines Zweirads in Abhängigkeit von Magnetfeldsensorsignalen bestimmt werden. Unter Radgröße wird dabei ein Wert verstanden, der den Durchmesser des Vorder- und/oder Hinterrads repräsentiert. Hierzu ist an wenigstens einem der Räder des Zweirads wenigstens ein Magnet angeordnet. Weiterhin ist vorgesehen, dass zur Erfassung der Magnetfeldsensorsignale des wenigstens einen Magneten ein Magnetfeldsensor am Zweirad befestigt ist. Um eine eindeutige Ableitung der Radgröße zu ermöglichen, ist es notwendig, den Magnetfeldsensor ortsfest am Zweirad in Relation zu dem zu erfassenden Rad zu befestigen. Zur Bestimmung der Radgröße werden Magnetfeldsensorgrößen des wenigstens einen Magneten während der Drehbewegung des Rades erfasst. Hierbei ist notwendig, dass durch die Magnetfeldsensorsignale wenigstens der Durchlauf eines Magneten durch den Erfassungsbereich des Magnetfeldsensors in Form eines Zeitintervalls als auch der zeitliche Abstand zwischen der Erfassung zweier aufeinander folgender Durchläufe von Magneten erfasst wird. Der Kern der Erfindung besteht dabei darin, dass die Radgröße bzw. ein Wert, der den Durchmesser des Rades repräsentiert, auf der Basis dieser beiden Größen bestimmt wird. Der Magnet ist dabei in Mantelnähe, auf der Felge oder im Ventil angebracht.

## Beschreibung

Die Erfindung betrifft ein Verfahren sowie eine Vorrichtung zur Bestimmung der Radgröße an einem Zweirad.

### Stand der Technik

Zur berührungslosen Abstands- und Einbaulagenmessung von rotierenden Teilen werden sowohl optische als auch magnetische Sensoren verwendet. So erfolgt beispielsweise die Geschwindigkeitsmessung bei Fahrrädern während der Fahrt mittels magnetischer Raddrehzahlsensoren, mit denen die Drehung der Fahrradreifen erfasst wird. Dabei sind die Raddrehzahlsensoren als Magnetsensoren beispielsweise ortsfest an der Vorderradgabel oder Hinterradgabel vorgesehen, die bei jedem Durchlauf eines Magneten, der an der Speiche montiert ist, einen Impuls liefern. Aus dem zeitlichen Abstand zweier Impulse kann so auf die Drehgeschwindigkeit des Rads und mittels eines Umrechnungsfaktors auf die Geschwindigkeit des Fahrzeugs bzw. Fahrrads geschlossen werden. Für die Berechnung der Geschwindigkeit ist eine Kenntnis über den Umfang des Rades nötig. Nachteilig bei einer derartigen Geschwindigkeitserfassung ist die notwendige Zeitdauer, da zumindest zwei Impulse registriert werden müssen. Bei sehr langsamen Drehbewegungen ist daher die Erfassung sehr träge. Weiterhin besteht bei dieser Form der Geschwindigkeitserfassung sehr leicht die Möglichkeit einer Manipulation. Auch die Erfassung der Bewegungsrichtung des Rades ist alleine aus diesen Signalen nicht ableitbar, da sowohl eine Vorwärts- als auch eine Rückwärtsfahrt die gleichen Messsignale liefern würde.

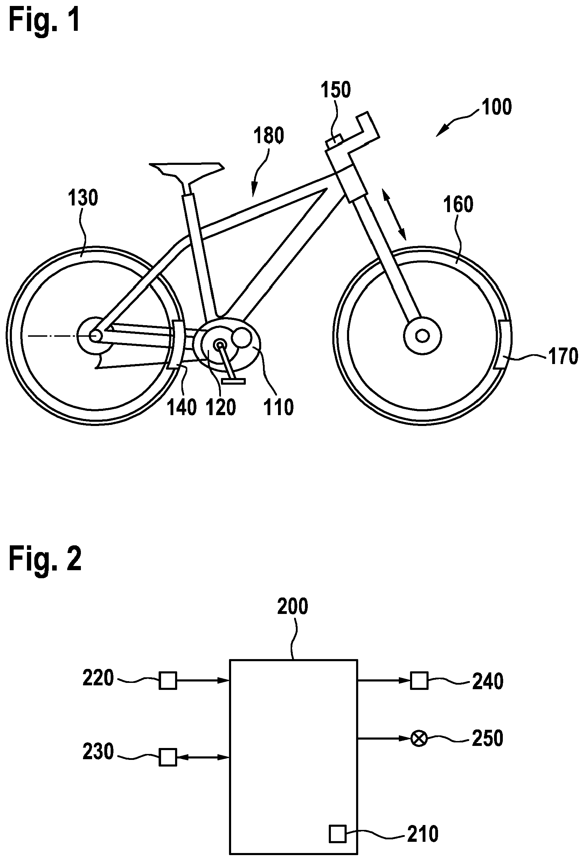

Eine weitere Möglichkeit, mittels der Erfassung von Magnetfeldsensorsignalen sowohl die Bewegungsrichtung, die Drehgeschwindigkeit als auch das Drehverhalten eines Rades 130 bzw. 160 eines Zweirads 100 (siehe Figur 1) zu erfassen, ist in den nicht vorveröffentlichten Schriften DE 10 2017 212905 A1, DE 10 2017 212911 A1, DE 10 2017 212952 A1 und DE 10 2017 212903 A1 beschrieben. Die dort beschriebenen Geschwindigkeitserfassungssysteme ermöglichen durch einen ortsfest mit dem Rahmen verbundenen Magnetfeldsensor 120, zum Beispiel einen in der Antriebseinheit 110 angeordneten Magnetfeldsensor 120, die Erfassung von Magnetfeldsensorsignalen wenigstens eines in das Hinterrad 130 und/oder Vorderrad 160 eingebrachten Magneten 140 bzw. 170. Über die so erfassten Magnetfeldsensorsignale, die während der Drehung des entsprechenden Rades in ihrer Intensität schwanken oder sogar aufgrund des Abstands zum Magnetfeldsensor 120 gänzlich unmessbar werden, kann neben der Geschwindigkeit des Rades bzw. des Zweirads auf den Abstand zwischen Magneten und Magnetsensor, auf die Verdrehung des Hinterrads 130 in Bezug auf den Rahmen 180 in einer Ebene bestehend aus der Fortbewegungsrichtung x und der Hochachse y sowie auf einen Höhen- und/oder Seitenschlag des Hinterrads 130 geschlossen werden. Weiterhin ist möglich, einen falschen Radeinbau des Hinterrads 130 sowie eine Lenkbewegung des Vorderrads 160 zu erkennen. Die entsprechende Auswertung der Magnetfeldsensorsignale kann in einem Steuergerät 150 für den Motor 110 oder einer anderen Steuer- und/oder Auswerteeinheit erfolgen. Alternativ zur Anordnung des ersten Magnetsensors 120 im oder am Motor 110 kann dieser auch direkt am Rahmen 180, am Sattel, am Gepäckträger, am Lenker, am Vorbau oder an einer Energiequelle für den Motor 110 angebracht sein. Weiterhin ist möglich, dass auch mehrere Magnete an jeweils einem Rad 130 bzw. 160 angebracht sind. Vorteilhafterweise sind die Magnete 140 bzw. 170 dabei in Mantelnähe, auf der Felge oder im Ventil angebracht.

Zur Geschwindigkeitserfassung des Fahrzeugs bzw. des Fahrrads ist neben der Erfassung der Drehgeschwindigkeit des Rads auch die Radgröße zu berücksichtigen. Hierbei kann eine Verwendung von falschen Angaben für den Durchmesser des Rades zu fehlerhaften Berechnungen der Fahrzeuggeschwindigkeit führen, beispielsweise bei der Eingabe in einem Fahrradtacho. Gerade bei Elektrofahrrädern, die in ihrer Höchstgeschwindigkeit bei der Unterstützung durch den Motor begrenzt sind, kann eine derartige fehlerhafte Berechnung unter Umständen zu einem Erlöschen der Versicherungspflicht führen.

Mit der vorliegenden Erfindung soll ein Verfahren sowie eine Vorrichtung beschrieben werden, mit dem bzw. mit der die Radgröße aus den erfassten Magnetfeldsensorsignale abgeleitet werden kann.

### Offenbarung der Erfindung

Mit dem beanspruchten Verfahren bzw. der beanspruchten Vorrichtung kann die Radgröße eines Zweirads in Abhängigkeit von Magnetfeldsensorsignalen bestimmt werden. Unter Radgröße wird dabei ein Wert verstanden, der den Durchmesser des Vorder- und/oder Hinterrads repräsentiert. Hierzu ist an wenigstens einem der Räder des Zweirads wenigstens ein Magnet angeordnet. Weiterhin ist vorgesehen, dass zur Erfassung der Magnetfeldsensorsignale des wenigstens einen Magneten ein Magnetfeldsensor am Zweirad befestigt ist. Um eine eindeutige Ableitung der Radgröße zu ermöglichen, ist es notwendig, den Magnetfeldsensor ortsfest am Zweirad in Relation zu dem zu erfassenden Rad zu befestigen. Hierbei bietet sich beispielsweise eine Befestigung des Magnetfeldsensors am Rahmen, am Sattel, am Gepäckträger oder in der Antriebseinheit bzw. in der Energieversorgungseinheit eines Elektrofahrrads an. Weiterhin ist darauf zu achten, dass die Entfernung zwischen dem wenigstens einen Magneten im drehenden Rad und dem Magnetfeldsensor möglichst gering ist, zumindest während eines Abschnitts der Drehung, um eine Erfassung der Magnetfeldsensorsignale zu ermöglichen. Zur Bestimmung der Radgröße werden Magnetfeldsensorgrößen des wenigstens einen Magneten während der Drehbewegung des Rades erfasst. Hierbei ist notwendig, dass durch die Magnetfeldsensorsignale wenigstens der Durchlauf eines Magneten durch den Erfassungsbereich des Magnetfeldsensors als auch der zeitliche Abstand zwischen der Erfassung zweier aufeinander folgender Durchläufe von Magneten erfasst wird. Dies wird üblicherweise dadurch erreicht, dass in einem ersten Schritt erste Magnetfeldsensorgrößen bei einer Annäherung eines Magneten im Erfassungsbereich des Magnetfeldsensors erfasst werden. In einem nachfolgenden zweiten Schritt werden zweite Magnetfeldsensorgrößen erfasst, die von einem im Umfang des Rades nachfolgenden Magneten erzeugt werden. Dabei kann es sich bei der Verwendung nur eines Magneten im Rad um den gleichen Magneten handeln oder bei der Verwendung von mehreren Magneten um den im Umfangsrichtung während der Drehbewegung nächsten Magneten handeln. So kann beispielsweise bei der Verwendung eines zweiten Magneten schon eine Teilumdrehung ausreichen, um die zweiten Magnetfeldsensorgrößen zu erzeugen. Der Kern der Erfindung besteht dabei darin, dass die Radgröße bzw. ein Wert, der den Durchmesser des Rades repräsentiert, auf der Basis der ersten und zweiten Magnetfeldsensorgrößen bestimmt wird.

Der Vorteil eines derartigen Verfahren bzw. einer Vorrichtung, die dieses Verfahren ausführt liegt darin, dass der Wert für die Radgröße unabhängig und während der Fahrt ermittelt werden kann. So können fehlerhafte manuelle Eingaben des Fahrers vermieden werden. Darüber hinaus kann auch schnell eine Änderung der Radgröße erkannt und bei der Geschwindigkeitsberechnung berücksichtigt werden.

Vorteilhafterweise ist zur Bestimmung der Radgröße der Magnetfeldsensor derart am Zweirad angebracht, dass er die Bewegung des Magneten am Hinterrad erfasst. Zwar ist auch die Erfassung des Magneten im Vorderrad möglich, jedoch kann es durch Lenkbewegungen quer zu Bewegungsrichtung des Zweirads zu einer Änderung der erfassten Zeitdauern zwischen zwei Magnetfeldsensorgrößen und somit zu einer Abweichung der Radgrößenbestimmung kommen. Dagegen ist die Ausrichtung des Hinterrads in Bewegungsrichtung starr.

Bei der Erfassung der (Dreh-)Bewegung des Magnetfelds bzw. der Magnetfeldgröße des Magneten kann sowohl ein 3D- als auch ein 2D-Magentfeldsensor eingesetzt werden. Im einfachsten Fall ist sogar nur die Erfassung einer Absolutgröße des Magnetfelds möglich, falls lediglich die Annäherung und Entfernung des Magneten vom Magnetfeldsensor erfasst werden soll und seitliche Bewegungen bei der Auswertung zumindest in erster Näherung nicht berücksichtigt werden sollen.

In einer Ausgestaltung der Erfindung kann vorgesehen sein, aus den ersten und zweiten Magnetfeldsensorgrößen die Umlaufzeit des Rades sowie die Durchlaufzeit wenigstens eines Magneten durch den Erfassungsbereich des Magnetfeldsensors zu ermitteln. Aus diesen beiden Größen kann in einem weiteren Verfahrensschritt die Radgröße bestimmt werden.

Eine Möglichkeit, die Umlaufzeit des Rades zu bestimmen besteht darin, den zeitlichen Abstand zwischen der Erfassung zwischen den ersten und zweiten Magnetfeldsensorgrößen zu ermitteln. Hierbei kann beispielsweise jeweils die Berücksichtigung der Extremwerte, z.B. der Maxima verwendet werden. Es kann jedoch auch vorgesehen sein, einen Schwellenwert für die Magnetfeldstärke vorzugeben, der beim erstmaligen Überschreiten eine Zeitmessung startet und beim zweiten Überschreiten die Zeitmessung beendet. Generell ist bei der Ableitung der Umlaufzeit des Rades aus dem so ermittelten zeitlichen Abstand die Kenntnis über die Anzahl und eventuell über den Abstand der Magnete notwendig. Wird nur ein Magnet im Rad verwendet, stellt der zeitliche Abstand zwischen dem Auftreten der gleichen Bedingung (z.B. Extrema, Überschreiten Schwellenwert) genau eine Drehung des Rades dar, da der gleiche Magnet diese Bedingung auslöst. Werden jedoch mehrere Magnete verwendet, vorzugsweise baugleiche Magnete, ist zusätzlich eine Information über den Abstand der Magnete in Umfangsrichtung zur Ableitung der Umlaufzeit notwendig. So können beispielsweise zwei baugleiche Magnete, die gegenüber im Rad angebracht sind, schon nach einer halben Umdrehung des Rades ein Maß für die Umdrehungsgeschwindigkeit liefern.

In einer ähnlichen Art und Weise kann die Magnetdurchlaufzeit eines Magneten aus den ersten und/oder zweiten Magnetfeldsensorgrößen abgeleitet werden. Während des Durchlaufs eines Magneten durch den Erfassungsbereich des Magnetfeldsensors kann ein Magnetfeldschwellenwert vorgegeben werden, der oberhalb eines allgemeinen Rauschens des Magnetfeldsensors bzw. der Umgebung vorgegeben werden sollte. Zur Ableitung der Magnetfelddurchlaufzeit wird dabei die Zeitdauer erfasst, in der die erfassten Magnetfeldsensorgrößen oberhalb des Magnetfeldschwellenwerts liegen. Durch die Erfassung sowohl der Umlaufzeit des Rades als auch der Magnetdurchlaufzeit kann bei gleichbleibender Magnetgeometrie, insbesondere bei gleichbleibender Magnetlänge im Umfangsrichtung, auf die Größe des Laufrades, d.h. auf die Radgröße geschlossen werden.

Um Schwankungen der Messwertaufnahme durch den Magnetfeldsensor auszugleichen, kann vorgesehen sein, zur Bestimmung der Radgröße die ersten und zweiten Magnetfeldsensorgrößen während mehrerer Umläufe des Rades zu mitteln. Wird das Zweirad bei diesen Mittelungen jedoch beschleunigt oder abgebremst, kann es zu Ungenauigkeiten und somit zu Abweichungen bei der Bestimmung der Radgröße kommen. Daher kann vorgesehen sein, dass nur dann eine Bestimmung der Radgrößen vorgenommen wird, wenn die nachfolgend bestimmten Umlaufzeiten kleiner als ein erster Schwellenwert ist, z.B. unterhalb einer Abweichung von 10 % oder noch spezieller 5 % liegen. Es kann auch vorgesehen sein, dass nur diejenigen Magnetfeldsensorgrößen für die Auswertung verwendet werden, bei denen die entsprechenden Umlaufzeiten und/oder Magnetdurchlaufzeiten unterhalb dieses ersten Schwellenwerts bezüglich eines längeren Durchschnittswerts liegen.

In einer besondere Weiterbildung kann vorgesehen sein, dass die bestimmte Radgröße mit einer abgespeicherten Radgröße verglichen wird. Sollte sich bei einem Vergleich der bestimmten Radgröße mit der abgespeicherten Radgröße eine zu hohe Abweichung ergeben, z.B. indem eine Überschreitung eines zweiten Schwellenwerts erkannt wird, kann eine Informationsgröße erzeugt oder eine Gegenmaßnahme eingeleitet werden. Durch diesen Vergleich und der Erzeugung der Informationsgröße kann der Fahrer des Zweirads darüber informiert werden, dass seine gegebenenfalls manuell eingegebene Radgröße fehlerhaft ist. In einer besondere Ausprägung der Erfindung kann darüber hinaus auch vorgesehen sein, dass Gegenmaßnahmen eingeleitet werden, wenn die Abweichung als zu groß erkannt wird. So kann vorgesehen sein, die Geschwindigkeitsberechnung nur noch von der bestimmten Radgröße abhängig zu berechnen oder auf den Motor einzuwirken, falls eine derart berechnete Geschwindigkeit eine für das Zweirad nicht mehr zulässige Höchstgeschwindigkeit übersteigt.

Besonders vorteilhaft ist die Anwendung der Erfindung bei einem wenigstens teilweise angetriebenen Elektrofahrrad.

Weitere Vorteile ergeben sich aus der nachfolgenden Beschreibung von Ausführungsbeispielen bzw. aus den abhängigen Patentansprüchen.

### Kurze Beschreibung der Zeichnungen

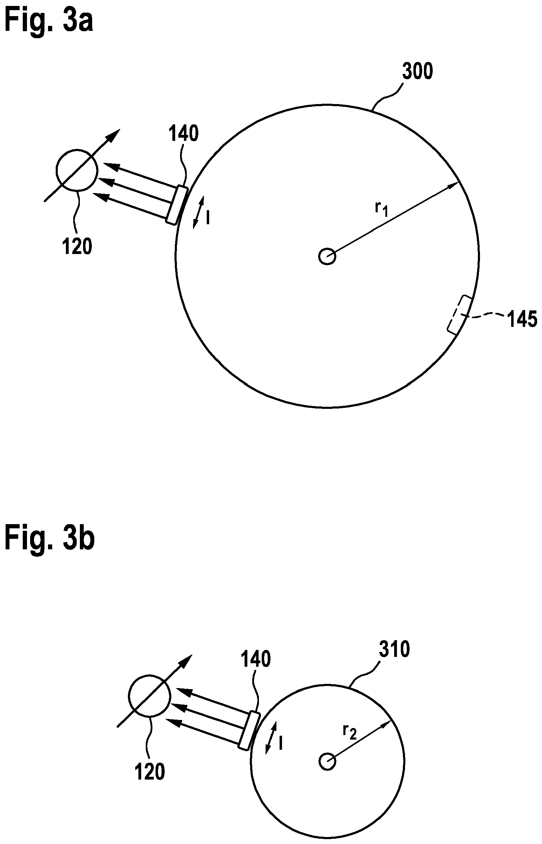

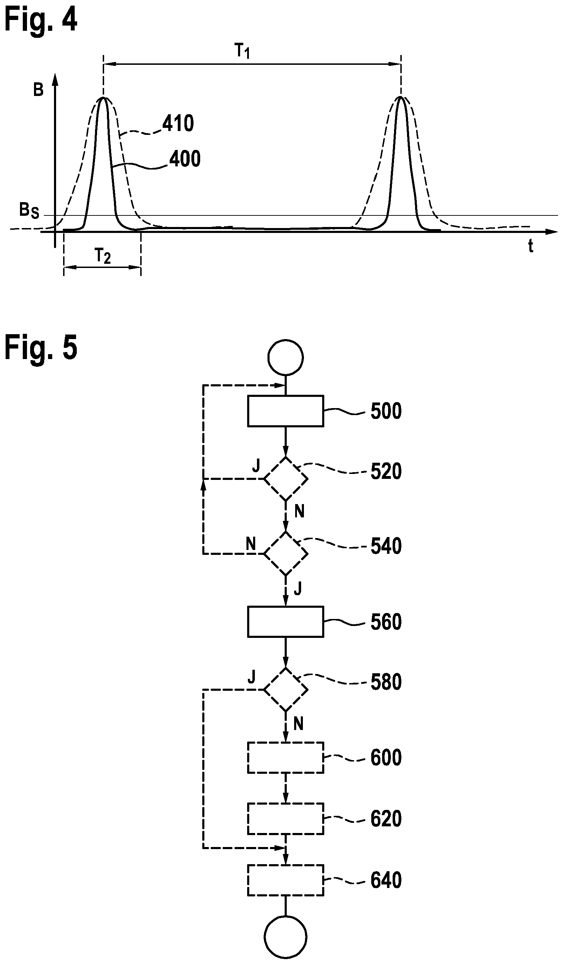

Figur 1 zeigt ein Zweirad, an dem die Erfindung eingesetzt werden kann. Mit der Figur 2 wird schematisch eine Vorrichtung dargestellt, die für die Ausführung des erfindungsgemäßen Verfahrens verwendet werden kann. Die Figuren 3a und b zeigen schematisch die Verhältnisse bei der Aufnahme der Magnetfeldsensorgrößen bei unterschiedlichen Raddurchmessern rl und r2. In der Figur 4 werden verschiedene Verläufe von Magnetfeldsensorgrößen bei unterschiedlichen Raddurchmessern gezeigt. In der Figur 5 ist ein mögliches Ablaufdiagramm des erfindungsgemäßen Verfahrens dargestellt.

### Ausführung der Erfindung

Die Vorrichtung zur Umsetzung des Verfahrens zur Bestimmung der Radgröße an einem Zweirad, z.B. einem Elektrofahrrad, ist in Figur 2 in Form eines Blockschaltbilds dargestellt. Hierbei kann es sich um eine Auswerteinheit 200 des Zweirads mit einem Speicher 210 handeln. In diesem Speicher 210 können Informationen zum Anbringungsorts des Magnetfeldsensors am Zweirad, zu dem verwendeten wenigstens einen Magneten im Rad sowie Schwellenwerte zur Ableitung der Radgröße abgespeichert sein. So ist denkbar, dass in dem Speicher 210 eine Datenbank vorgesehen sein, die sowohl die Typen verschiedener verwendbarer Magnete und Magnetfeldsensoren bzw. deren Eigenschaften aufweist. Weiterhin kann vorgesehen sein, dass der Speicher 210 eine Vergleichstabelle enthält, mittels der aus den erfassten Umlaufzeiten des Rades bzw. der Magnetdurchlaufzeit eine Ableitung der Radgröße erlaubt. Die Auswerteeinheit 200 kann dabei sowohl für die Ableitung der Geschwindigkeitsinformationen in Abhängigkeit von Magnetfeldsensorgrößen des Magnetfeldsensors 220 als auch zur Überprüfung des Zustands des Magneten vorgesehen sein. In diesem Fall können optional entsprechenden Informationen von einer weiteren Auswerte-/Steuereinheit 230 über die Geschwindigkeitssignale oder sonstige für die Überprüfung bzw. Bestimmung relevante Informationen eingelesen werden. Ebenso ist möglich, Informationen zum Fehlerzustand an diese weitere Auswerte-/Steuereinheit 230 auszugeben. So ist denkbar, dass bei einem erkannten Fehlerzustand des Magneten die weiteren Geschwindigkeitssignale durch die weitere Auswerte-/Steuereinheit 230 eingelesen werden, um ein valides Geschwindigkeitssignal für die Ansteuerung z.B. eines Motors an dem Zweirad vorliegen zu haben. In Abhängigkeit der in der Auswerteeinheit 200 bestimmten Radgröße kann darüber hinaus eine Verarbeitungseinheit 240 informiert werden, die ihrerseits beispielsweise den Motor ansteuert. Die durch die Auswerteeinheit 200 bestimmte Radgröße, die daraus abgeleitete Geschwindigkeit des Zweirads und/oder ein Fehlerzustand der verwendeten Magnete kann dem Fahrer des Zweirads über eine entsprechende Anzeige 250 angezeigt werden. Auch eine Anzeige, dass die durch die Auswerteinheit 200 bestimmte Radgröße von einer im Speicher 210 abgelegten Radgröße abweicht, kann über diese Anzeige dem Fahrer mitgeteilt werden.

In den Figuren 3a und 3b werden die Verhältnisse bei der Erfassung der Magnetfeldsensorgrößen durch den Magnetfeldsensor 120 bzw. 220 anhand unterschiedlich großer Räder 300 und 310 dargestellt. Die Länge l des Magneten 140 in Umfangsrichtung soll dabei sowohl bei einem großen Rad 300 mit dem Radius rl als auch bei einem kleinen Rad 310 mit dem Radius r2<rl gleich sein. Der Magnet 140 erzeugt dabei während seinen Umlaufens im Magnetfeldsensor 120 entsprechende Magnetfeldsensorsignale, die in Abhängigkeit von der Annäherung an den Magnetfeldsensor stärker werden. Üblicherweise sind die verwendeten Magnetfeldsensoren 120 bzw. die verwendeten Magnete 140 derart ausgestaltet, dass die Magnetfeldsensorgrößen nur in einem gewissen Bereich größter Annäherung erfasst werden können. So würde eine Position 145 des Magneten 140 im Magnetfeldsensor 120 keine verwertbaren Magnetfeldsensorgrößen erzeugen. Durch den größeren Durchmesser des Rades 300 weist der Magnet 140 bei diesem Rad eine höhere Umlaufgeschwindigkeit des Magneten auf, so dass der Magnet 140 schneller durch den Erfassungsbereich des Magnetfeldsensors 120 bewegt wird. Entsprechend sind die Magnetfeldsensorgrößen 400 des Rades 300 gemäß dem Diagramm der Figur 4 schmaler als diejenigen des entsprechenden kleineren Rades 310.

Wird nur ein Magnet im Rad verwendet, entspricht der zeitliche Abstand T1 zweier nachfolgend erfasster erster und zweiter Magnetfeldsensorgrößen der Umlaufzeit des Rades, z.B. indem die Zeit zwischen zwei Maxima erfasst wird. Wird hingegen beispielsweise ein zweiter Magnet an der dem ersten Magneten 140 gegenüberliegenden Position 145 verwendet, würde der zeitliche Abstand zwischen diesen ersten und zweiten Magnetfeldsensorgrößen der Hälfte der Umlaufzeit des Rades entsprechen. Eine entsprechende Umrechnung lässt sich auch durch eine nicht symmetrische Anbringung der Magnete oder bei der Verwendung mehrerer Magnete durchführen. Hierbei kann jedoch evtl. die Mittelung über mehrere Umläufe notwendig sein. Mit der Verwendung eines Magnetfeldsensorschwellenwert BS kann darüber hinaus auch die Durchlaufzeit T2 des Magneten 140 durch den Erfassungsbereich des Magnetfeldsensors 140 erfasst werden. Diese Magnetdurchlaufzeit T2 wird durch die Zeitdauer bestimmt, in der die Magnetfeldsensorgröße oberhalb des Magnetfeldsensorschwellenwert BS liegt. Dabei ist dieser Magnetfeldsensorschwellenwert BS derart zu wählen, dass er das Rauschen bzw. die Umgebungserfassung durch den Magnetfeldsensor 120 ausblendet, so dass keine Fehlmessungen ausgelöst werden.

Ein mögliches Verfahren zur Realisierung der erfindungsgemäßen Idee ist im Flussdiagramm der Figur 5 dargestellt. Dieses Verfahren kann in regelmäßigen Abständen gestartet werden, um die Radgröße zu bestimmen oder deren Wert mit abgespeicherten Radgrößen zu vergleichen. Alternativ kann das Verfahren auf Anforderung des Fahrers des Zweirads oder eines Steuerungs- und/oder Regelungssystems am Zweirad initiiert werden.

Nach dem Start des Verfahrens werden im ersten Schritt 500 erste und zweite Magnetfeldsensorgrößen durch den Magnetfeldsensor 120 erfasst. Hierbei kann optional bereits im Schritt 500 geprüft werden, ob ausreichende Daten für die ersten und zweiten Magnetfeldsensorgrößen vorliegen, um nachfolgenden die Umlaufzeit T1 des Rades und die Magnetdurchlaufzeit T2 zu ermitteln. Dabei wird gegebenenfalls berücksichtigt, wieviele Magnete im Rad verbaut sind als auch, wie deren Abstand zueinander ist. Entsprechende Daten können dabei aus dem Speicher 210 entnommen werden. Im nachfolgenden optionalen Schritt 520 wird geprüft, ob eine Mittelung der Daten gewünscht oder erforderlich ist. Falls die Genauigkeit der Ableitung der erhöht werden soll, bietet es sich an, den Schritt 500 zu wiederholen und weitere erste und zweite Magnetfeldgrößen zu erfassen und eine Mittelung zu bilden. Falls keine Wiederholung der Erfassung gewünscht wurde oder eine ausreichende vorbestimmte Anzahl von Mittelungen durchgeführt worden ist, wird im nächsten optionalen Schritt 540 die Qualität der erfassten ersten und zweiten Magnetfeldsensorgrößen geprüft. Ist mit den so erhaltenen Daten für die ersten und zweiten Magnetfeldsensorgrößen eine Ableitung für die die Umlaufzeit T1 des Rades und die Magnetdurchlaufzeit T2 möglich, so werden diese sowie ein Verhältnis von der Magnetdurchlaufzeit T2 zur Umlaufzeit T1 im nächsten Schritt 560 gebildet. Liegen jedoch aufgrund von Beschleunigungs- und/oder Abbremsvorgängen zu große Schwankungen für die aufeinander folgenden Umlaufzeiten T1 bzw. zu bestimmenden Radgrößen vor, z.B. indem eine Schwankung von über 10%, 5% oder in besonderen Fällen 2 % erkannt wird, kann vorgesehen sein, dass die Messwerterfassung im Schritt 500 erneut durchlaufen wird, gegebenenfalls auch indem die bisherige Mittelwertbildung verworfen wird und erneut mit einer Mittelwertbildung begonnen wird. Wie bereits ausgeführt, wird ausgehend von den erfassten ersten und zweiten Magnetfeldsensorgrößen im Schritt 560 Umlaufzeiten des Rades und des Magnetdurchlaufs abgeleitet und ins Verhältnis gesetzt. Dieses Verhältnis wird weiterhin dazu verwendet, einen Wert für die Radgröße, d.h. den Durchmesser des Rades zu bestimmen.

In einer weiteren Ausführung des Verfahrens kann ausgehend von der bestimmten Radgröße ein Vergleich mit zuvor erzeugten oder auch abgespeicherten Radgrößen im nachfolgenden Schritt 580 oder einem eigenständigen Verfahren erfolgen. Wird keine Abweichung oder nur eine geringe Abweichung festgestellt, z.B. indem die Wert um maximal 2 % oder 5 % auseinander liegen, kann in einem weiteren Schritt 640 die Radgröße an den Fahrer des Zweirads weitergegeben werden, z.B. in einer Anzeige angezeigt werden. Alternativ oder zusätzlich kann die Radgröße auch in einen Speicher 210 für weitere Verwendungen abgespeichert oder an Steuerung- und Regelungsalgorithmen weitergegeben werden. So ist denkbar, die Steuerung eines Antriebs des Zweirads in Abhängigkeit der so bestimmten Radgröße durchzuführen, um gegebenenfalls den Antriebsmotor bei der Erreichung einer vorgegebenen Höchstgeschwindigkeit abzuregeln. Sollte jedoch im Schritt 580 eine zu hohe Abweichung zwischen der bestimmten Radgröße und dem abgespeicherten Wert der Radgröße festgestellt werden, kann optional im nachfolgenden Schritt 600 eine Meldung an den Fahrer erfolgen. Diese Meldung kann der Fahrer dazu nutzen, die Radgröße manuell zu korrigieren oder die Korrektur für die weitere interne Verwendung der Radgröße z.B. für die Geschwindigkeitsmessung zu bestätigen. Optional kann nach der Erkennung einer ausreichend großen Abweichung in Schritt 580 in einem nachfolgenden Schritt 620 Korrekturwerte für die korrekte Radgröße abgeleitet werden. Diese korrigierten Werte für die Radgrößen oder die bestimmten Radgrößen können dann im Schritt 640 für Steuerung- und/oder Regelungszwecke verwendet werden.

Generell kann direkt aus dem Verhältnis T2/T1 die Radgröße errechnet werden. Alternativ kann dieses Verhältnis dazu genutzt werden, basierend auf einer Vergleichstabelle die Radgröße abzuleiten.

## Patentansprüche

1. Verfahren zur Bestimmung der Radgröße an einem Zweirad (100),
wobei das Zweirad (100)
• an dem Rad (130, 160), dessen Radgröße bestimmt wird, wenigstens einen Magneten (140, 170) und
• einen ortsfesten Magnetfeldsensor (120, 220)
aufweist,
wobei zur Bestimmung der Radgröße durch den Magnetfeldsensor (120, 220)
• während wenigstens einer Drehbewegung des Rades (130, 160)
∘ erste Magnetfeldsensorgrößen während einer ersten Annäherung eines Magneten (140, 170) an den Magnetfeldsensor (120, 220) und
∘ zweite Magnetfeldsensorgrößen während einer zweiten Annäherung des gleichen oder eines weiteren Magneten (140, 170) an den Magnetfeldsensor (120, 220)
erfasst werden,
**dadurch gekennzeichnet dass**
• in Abhängigkeit von den ersten und zweiten Magnetfeldsensorgrößen eine den Durchmesser des Rades (130, 160) repräsentierende Radgröße bestimmt wird.

2. Verfahren zur Bestimmung der Radgröße nach Anspruch 1, **dadurch**
**gekennzeichnet dass** in Abhängigkeit der ersten und zweiten Magnetfeldsensorgrößen
• eine Umlaufzeit (Tl) des Rades (130, 160) und
• eine Magnetdurchlaufzeit (T2) des wenigstens einen Magneten (140, 170)
abgeleitet wird,
wobei die Radgröße in Abhängigkeit des Verhältnisses der Magnetdurchlaufzeit zur Umlaufzeit des Rades erzeugt wird.

3. Verfahren zur Bestimmung der Radgröße nach Anspruch 2, **dadurch gekennzeichnet dass** die Umlaufzeit des Rades (130, 160) in Abhängigkeit von zwei aufeinander folgenden Extremwerten der ersten und zweiten Magnetfeldsensorgrößen abgeleitet wird.

4. Verfahren zur Bestimmung der Radgröße nach Anspruch 2 oder 3, **dadurch gekennzeichnet dass** die Magnetdurchlaufzeit in Abhängigkeit der Überschreitung der Magnetfeldsensorgrößen über einen Magnetfeldschwellenwert (BS) abgeleitet wird, wobei insbesondere vorgesehen ist, dass der Magnetfeldsensorschwellenwert (BS) derart gewählt wird, dass er größer als die durch den Magnetfeldsensor erfassten Magnetfeldsensorgrößen des wenigstens einen Magneten (140, 170) bei dessen größten Entfernung zum Magnetfeldsensor (120, 220) ist.

5. Verfahren zur Bestimmung der Radgröße nach einem der vorherigen Ansprüche, **dadurch gekennzeichnet dass** die Radgröße bestimmt wird, wenn sich das Verhältnis der Umlaufzeit aufeinander folgender Umläufe des Rades (130, 160) um maximal einen ersten Schwellenwert unterscheidet, wobei insbesondere vorgesehen ist, dass die Radgröße bestimmt wird, wenn die Abweichung der Umlaufzeiten kleiner als 10 % beträgt.

6. Verfahren zur Bestimmung der Radgröße nach einem der vorherigen Ansprüche, **dadurch gekennzeichnet dass**
• ein Vergleich der bestimmten Radgröße mit einer vorgegebenen Radgröße durchgeführt wird, und
• eine Informationsgröße erzeugt wird, falls die Abweichung des Vergleichs größer als ein zweiter Schwellenwert ist.

7. Vorrichtung zur Bestimmung der Radgröße an einem Zweirad (100), insbesondere zur Durchführung eines Verfahrens nach einem der Ansprüche 1 bis 6,
wobei das Zweirad (100)
• an dem Rad (130, 160), dessen Radgröße bestimmt wird, wenigstens einen Magneten (140, 170) und
• einen ortsfesten Magnetfeldsensor (120, 220)
aufweist,
wobei die Vorrichtung zur Bestimmung der Radgröße durch den Magnetfeldsensor (120, 220) ein Mittel (200) aufweist, mit dem
• während wenigstens einer Drehbewegung des Rades (130, 160)
∘ erste Magnetfeldsensorgrößen während einer ersten Annäherung eines Magneten (140, 170) an den Magnetfeldsensor (120, 220) und
∘ zweite Magnetfeldsensorgrößen während einer zweiten Annäherung des gleichen oder eines weiteren Magneten (140, 170) an den Magnetfeldsensor (120, 220)
erfasst wird,
**dadurch gekennzeichnet dass**
• in Abhängigkeit von den ersten und zweiten Magnetfeldsensorgrößen eine den Durchmesser des Rades (130, 160) repräsentierende Radgröße erzeugt wird.

8. Vorrichtung nach Anspruch 7, **dadurch gekennzeichnet dass** das Mittel (200) in Abhängigkeit der ersten und zweiten Magnetfeldsensorgrößen
• eine Umlaufzeit (Tl) des Rades (130, 160) und
• eine Magnetdurchlaufzeit (T2) des wenigstens einen Magneten (140, 170)
ableitet,
wobei die Radgröße in Abhängigkeit des Verhältnisses der Magnetdurchlaufzeit zur Umlaufzeit des Rades erzeugt wird.

9. Vorrichtung nach Anspruch 8, **dadurch gekennzeichnet dass** das Mittel (200) die Umlaufzeit des Rades (130, 160) in Abhängigkeit von zwei aufeinander folgenden Extremwerten der ersten und zweiten Magnetfeldsensorgrößen ableitet.

10. Vorrichtung nach Anspruch 8 oder 9, **dadurch gekennzeichnet dass** das Mittel (200) die Magnetdurchlaufzeit in Abhängigkeit der Überschreitung der Magnetfeldsensorgrößen über einen Magnetfeldschwellenwert (BS) ableitet, wobei insbesondere vorgesehen ist, dass das Mittel den Magnetfeldsensorschwellenwert (BS) derart wählt, dass er größer als die durch den Magnetfeldsensor erfassten Magnetfeldsensorgrößen des wenigstens einen Magneten (140, 170) bei dessen größten Entfernung zum Magnetfeldsensor (120, 220) ist.

11. Vorrichtung nach einem der vorherigen Ansprüche 7 bis 10 , **dadurch gekennzeichnet dass** das Mittel (200) die Radgröße erzeugt, wenn das Verhältnis der die Umlaufzeit aufeinander folgender Umläufe des Rades kleiner als ein erster Schwellenwert ist, wobei insbesondere vorgesehen ist, dass die Radgröße erzeugt wird, wenn die Abweichung der Umlaufzeiten kleiner als 10 % beträgt.

12. Vorrichtung nach einem der vorherigen Ansprüche 7 bis 11, **dadurch**
**gekennzeichnet dass** das Mittel (200)
• ein Vergleich der bestimmten Radgröße mit einer vorgegebenen Radgröße durchführt, und
• eine Informationsgröße erzeugt, falls die Abweichung des Vergleichs größer als ein zweiter Schwellenwert ist.
